# FASCICULE DE BREVET EUROPEEN

(11) **EP 1 751 477 B1**
(45) Date de publication et mention de la délivrance du brevet: **13.05.2009**
(21) Numéro de dépôt: 05772942.8
(22) Date de dépôt: 24.05.2005
(51) Int. Cl.: F25B 37/00, F25B 39/02

(54) **DISPOSITIF D'ECHANGE ET DE TRANSFERT THERMIQUE, NOTAMMENT POUR VEHICULE AUTOMOBILE**
WÄRMETAUSCHER UND WÄRMEÜBERTRAGUNGSVORRICHTUNG, IM BESONDEREN FÜR EIN KRAFTFAHRZEUG
HEAT EXCHANGE AND HEAT TRANSFER DEVICE, IN PARTICULAR FOR A MOTOR VEHICLE

(30) Priorité: 02.06.2004 FR 0405950
(43) Date de publication de la demande: 14.02.2007
(73) Titulaire: PEUGEOT CITROËN AUTOMOBILES S.A., 78140 Vélizy Villacoublay (FR)
(72) Inventeur: BOUDARD, Emmanuel, F-78960 Voisins le Bretonneux (FR); BRUZZO, Vitale, I-35100 Padoue (IT)
(74) Mandataire: Allain, Laurent
(86) Numéro de dépôt international: PCT/FR2005/001284
(87) Numéro de publication internationale: WO 2006/000676

(56) Documents cités:
- EP-A- 1 106 941
- EP-A- 1 160 530
- EP-A- 1 233 239
- DE-C- 469 735
- DE-C- 476 256
- GB-A- 507 416
- PATENT ABSTRACTS OF JAPAN vol. 017, no. 059 (M-1363), 5 février 1993 (1993-02-05) & JP 04 268176 A (DAIKIN IND LTD), 24 septembre 1992 (1992-09-24)
- PATENT ABSTRACTS OF JAPAN vol. 1998, no. 13, 30 novembre 1998 (1998-11-30) & JP 10 206063 A (TOYO RADIATOR CO LTD; HONDA MOTOR CO LTD), 7 août 1998 (1998-08-07)
- PATENT ABSTRACTS OF JAPAN vol. 1998, no. 02, 30 janvier 1998 (1998-01-30) -& JP 09 280692 A (OSAKA GAS CO LTD), 31 octobre 1997 (1997-10-31)

## Description

On connaît déjà dans l'état de la technique, notamment d'après WO 01/18463, un dispositif d'échange et de transfert_thermique du type comprenant un ensemble évaporateur/absorbeur raccordé à un circuit de circulation d'un mélange binaire comportant un premier fluide dit frigorigène et un second fluide dit absorbant, le fluide frigorigène liquide étant évaporé dans une partie évaporateur de l'ensemble puis absorbé dans une partie absorbeur de l'ensemble par le mélange riche en fluide absorbant.

Un dispositif d'échange et de transfert thermique du type précité permet notamment de produire du froid en utilisant une source de chaleur dont la température peut être relativement basse.

Le mélange binaire peut comprendre de l'eau et du bromure de lithium, l'eau formant dans ce cas le fluide frigorigène, ou bien de l'ammoniac et de l'eau, l'ammoniac formant dans ce cas le fluide frigorigène.

En plus de l'ensemble évaporateur/absorbeur, un dispositif d'échangé et de transfert thermique du type précité comprend habituellement un ensemble générateur/condenseur.

La partie générateur, encore appelée partie désorbeur, sépare le fluide frigorigène du fluide absorbant. En effet, dans la partie générateur, le mélange binaire est chauffé afin de provoquer la vaporisation d'une partie du fluide frigorigène qui y est dissous (désorption du fluide frigorigène). On obtient donc, à la sortie de la partie générateur, de la vapeur de fluide frigorigène et un mélange liquide appauvri en fluide frigorigène (riche en fluide absorbant). Cette vapeur de fluide frigorigène est condensée dans la partie condenseur.

Dans l'ensemble évaporateur/absorbeur, le fluide frigorigène liquide provenant de la partie condenseur est vaporisé, à la partie évaporateur, puis dissous dans le mélange (liquide) appauvri en fluide frigorigène, à la partie absorbeur.

Or, dans un ensemble évaporateur/absorbeur classique, les moyens de canalisation du fluide frigorigène vaporisé depuis la partie évaporateur jusqu'à la partie absorbeur génèrent généralement une augmentation de pression du fluide frigorigène vaporisé limitant les performances du dispositif d'échange et de transfert thermique.

A la partie évaporateur, il est connu de vaporiser le fluide frigorigène liquide provenant de la partie condenseur au moyen d'au moins un premier gicleur. Par ailleurs, à la partie absorbeur, il est connu de vaporiser le mélange appauvri en fluide frigorigène au moyen d'au moins un second gicleur. Les gicleurs forment des gouttelettes augmentant les surfaces de contact des fluides et favorisant l'absorption du mélange appauvri en fluide frigorigène (donc riche en fluide absorbant).

Ainsi, classiquement, un ensemble évaporateur/absorbeur comprend des gicleurs destinés à vaporiser le fluide frigorigène liquide et le mélange liquide appauvri en fluide frigorigène.

Toutefois, dans un dispositif d'échange et de transfert thermique muni d'un ensemble évaporateur/absorbeur du type à gicleurs, le rapport performance/volume est très faible.

De plus, si on installe sur un véhicule un dispositif d'échange et de transfert thermique muni d'un ensemble évaporateur/absorbeur du type à gicleurs, les jets de fluides issus de ces gicleurs sont susceptibles d'être perturbés par les accélérations ou les inclinaisons du véhicule, du moins quand ces accélérations se font selon certaines directions, au risque de provoquer un mélange intempestif du fluide frigorigène et du mélange appauvri en fluide frigorigène.

Le document DE-A-469 735 décrit un dispositif d'échange et de transfert thermique tel que revendiqué par le préambule de la revendication 1.

L'invention a notamment pour but de proposer un dispositif d'échange et de transfert thermique du type précité, susceptible d'être installé sur un véhicule automobile, comportant un ensemble évaporateur/absorbeur fiable dont le flux de fluide frigorigène vaporisé soit peu sensible aux augmentations de pression et dont le fonctionnement soit peu sensible aux accélérations et inclinaisons du véhicule.

A cet effet, l'invention a pour objet un dispositif d'échange et de transfert thermique selon les caractéristiques de la revendication 1.

Grâce à cet agencement, la vitesse de transfert du fluide frigorigène vaporisé entre les surfaces de référence des organes d'évaporateur et d'absorbeur est relativement faible si bien que la pression du flux de fluide frigorigène vaporisé n'augmente pas de façon préjudiciable au cours de ce transfert. De plus, le flux de fluide frigorigène liquide de même que le flux de mélange appauvri en fluide frigorigène sont relativement peu sensibles aux accélérations et inclinaisons du véhicule.

De plus, l'invention permet de réaliser un dispositif d'échange et de transfert thermique sans gicleur dont ayant un rapport performance/volume relativement élevé.

D'autres caractéristiques optionnelles de ce dispositif de régulation thermique sont revendiquées par les revendications 2 à 16.

L'invention sera mieux comprise à la lecture de la description qui va suivre, donnée uniquement à titre d'exemple et faite en se référant aux dessins annexés dans lesquels :
- la figure 1 est une vue schématique en élévation d'un ensemble évaporateur/absorbeur d'un dispositif d'échange et de transfert thermique selon l'invention ;
- la figure 2 est une vue schématique de dessus de l'ensemble évaporateur/absorbeur représenté sur la figure 1 ;
- la figure 3 est une vue de l'ensemble évaporateur/absorbeur suivant la flèche 3 de la figure 2.

On a représenté sur les figures un dispositif d'échange et de transfert thermique, selon l'invention, désigné par la référence générale 10. Dans l'exemple décrit, le dispositif de régulation thermique 10 est destiné à être installé dans un véhicule automobile.

Le dispositif de régulation thermique 10 comprend un circuit classique de circulation d'un mélange binaire, connu en soi. Ce mélange binaire comporte un premier fluide dit frigorigène et un second fluide dit absorbant.

Le dispositif de régulation thermique 10 comprend un ensemble générateur/condenseur classique (non représenté) et un ensemble 12 évaporateur/absorbeur représenté sur les figures. Ces deux ensembles sont raccordés de façon connue en soi au circuit de circulation du mélange binaire.

Conformément à un fonctionnement classique, le fluide frigorigène sort sous forme liquide de la partie condenseur de l'ensemble générateur/condenseur et le mélange liquide appauvri en fluide frigorigène (donc riche en fluide absorbant) alimente la partie absorbeur de l'ensemble 12 évaporateur/absorbeur.

Le fluide frigorigène liquide sortant de la partie condenseur est évaporé dans la partie évaporateur de l'ensemble 12 évaporateur/absorbeur. Ensuite, le fluide frigorigène vaporisé est absorbé par le mélange riche en fluide absorbant dans la partie absorbeur de l'ensemble 12 évaporateur/absorbeur.

En se référant aux figures, on voit que la partie évaporateur de l'ensemble 12 comprend au moins un organe d'évaporateur 14 muni d'une masse d'évaporateur 16 et que la partie absorbeur de l'ensemble 12 comprend au moins un organe 18 d'absorbeur muni d'une masse d'absorbeur 20.

L'ensemble 12 évaporateur/absorbeur comprend deux surfaces en vis à vis E, A délimitant respectivement les masses 16, 20 d'évaporateur et d'absorbeur.

La masse 16 d'évaporateur est également délimitée par une surface E' opposée à la précédente surface E.

De même, la masse d'absorbeur 20 est également délimitée par une surface A' opposée à la précédente surface A.

De préférence, les surfaces en vis à vis E, A sont sensiblement planes et parallèles entre elles de même que les surfaces E' et A'. La distance entre les surfaces opposées E, E' ou A, A' correspond à l'épaisseur des masses 16, 20, c'est-à-dire, dans l'exemple décrit, l'épaisseur des organes 14, 18.

La distance moyenne entre les surfaces en vis à vis E, A sera déterminée par l'homme du métier de façon à éviter autant que possible que le fluide frigorigène liquide provenant de la partie condenseur et le mélange riche en fluide absorbant ne se mélangent.

Les aires des surfaces en vis à vis seront déterminées par l'homme du métier de façon que la vitesse du fluide frigorigène vaporisé entre les surfaces en vis à vis E, A soit très nettement inférieure aux vitesses de compressibilité des gaz (mach 0,8).

De préférence, la masse 16 d'évaporateur forme des moyens d'approvisionnement du fluide frigorigène liquide (premier liquide) à la surface E de l'organe d'évaporateur 14 et la masse 20 d'absorbeur forme des moyens d'approvisionnement du mélange riche en fluide absorbant (second liquide) à la surface A de l'organe d'absorbeur 18.

A cet effet, chaque masse 16, 20 est en matériau de texture favorisant la répartition du fluide frigorigène liquide ou du mélange riche en fluide absorbant sur la surface E, A.

Dans l'exemple décrit, les masses 16, 20 d'évaporateur et d'absorbeur sont poreuses et comprennent, de préférence, des fibres ou une mousse à cellules ouvertes.

Ainsi, chaque organe 14, 18 d'évaporateur et d'absorbeur est délimité par deux surfaces opposées poreuses correspondant aux surfaces E, E', A, A', si bien que ces organes sont perméables au fluide frigorigène sous forme vapeur notamment suivant leur épaisseur.

L'étalement et la répartition homogène des liquides sur les surfaces E, A en vis à vis peuvent également être favorisés en prévoyant des reliefs ou motifs, creux ou saillants, sur ces surfaces E, A.

On mettra ainsi à profit la porosité des masses 16, 20 et la présence de reliefs ou motifs pour optimiser le caractère hydrophile des surfaces E, A en vis à vis.

Eventuellement, chaque surface E, A peut présenter une caractéristique géométrique maximisant son aire. Ainsi, les aires des surfaces E, A peuvent être maximisées en choisissant des surfaces E, A de formes générales ondulées ou crénelées.

Le matériau de chaque masse 16, 20 a de préférence une conductivité thermique supérieure ou égale à 10 W/mK. Un tel matériau peut être en métal ou en céramique.

De préférence, l'organe d'évaporateur 14 est couplé thermiquement à un premier circuit de fluide caloporteur circulant dans le véhicule automobile, dit fluide de régulation externe. Ce fluide de régulation externe est destiné à prélever des frigories de l'organe d'évaporateur 14 par exemple pour refroidir un espace ou un organe du véhicule.

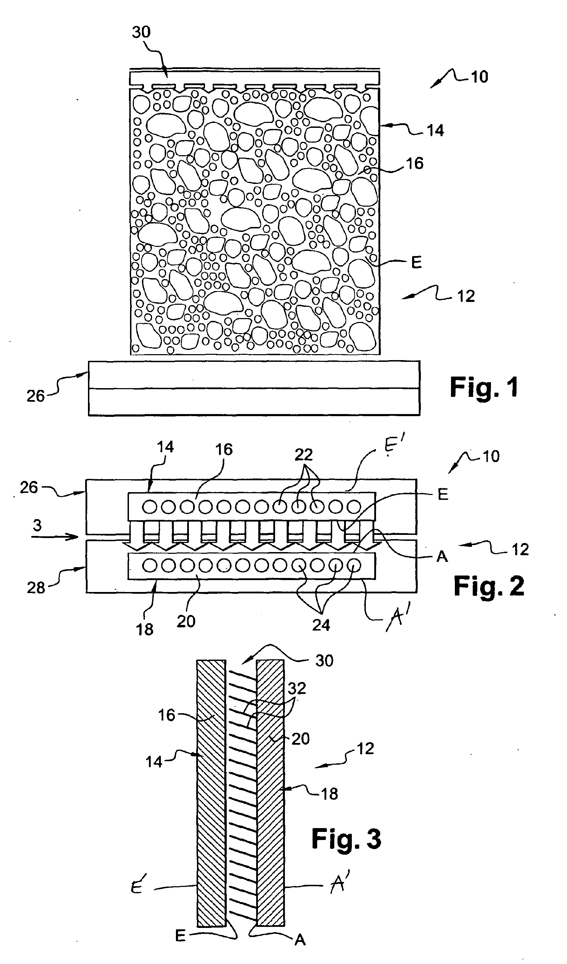

Comme on peut le voir sur la figure 2, des canaux 22 sont ménagés dans la masse 16 d'évaporateur pour le passage du fluide de régulation externe.

De préférence également, l'organe d'évaporateur 18 est couplé thermiquement à un second circuit de fluide caloporteur circulant dans le véhicule automobile, dit fluide de régulation interne. Ce fluide de régulation interne est destiné à prélever des calories de l'organe d'absorbeur 18 notamment pour optimiser le fonctionnement de l'ensemble 12 évaporateur/absorbeur.

Comme on peut le voir sur la figure 2, des canaux 24 sont ménagés dans la masse 20 d'absorbeur pour le passage du fluide de régulation interne.

On notera que l'ensemble 12 évaporateur/absorbeur comprend des moyens 26, 28, comprenant par exemple des réservoirs et canaux, pour la récupération sélective, notamment par gravité, d'une part, du fluide frigorigène liquide sortant de l'organe d'évaporateur 14 et, d'autre part, du mélange riche en fluide absorbant sortant de l'organe d'absorbeur 18. Les moyens 26, 28 évitent ainsi le mélange intempestif du fluide frigorigène liquide avec le mélange riche en fluide absorbant.

Le cas échéant, l'ensemble 12 évaporateur/absorbeur peut comprendre plusieurs organes 14, 18, par exemple au nombre de cinq, formant des organes tantôt d'évaporateur 14 et tantôt d'absorbeur 18 disposés en alternance.

De préférence, comme cela est représenté sur la figure 3, des moyens 30 de renvoi du mélange riche en fluide absorbant vers la surface A de l'organe d'absorbeur 18 sont intercalés entre les surfaces de référence E, A.

Dans l'exemple décrit, les moyens de renvoi 30 comprennent des parois 32 de renvoi orientées de façon à favoriser l'écoulement par gravité du mélange riche en fluide absorbant vers la surface de référence A de l'organe d'absorbeur 18. Ces parois 32 sont portées par la masse 20 d'absorbeur ou un autre support du dispositif 10.

On notera que, dans l'exemple décrit, les parois de renvoi 32 sont sensiblement parallèles entre elles et inclinées en pente descendante de la surface E d'évaporateur vers la surface A d'absorbeur.

On décrira ci-dessous certains des aspects du fonctionnement du dispositif de régulation thermique 10 liés à l'invention.

Sur la figure 1, on a représenté un conduit 30 formant des moyens d'approvisionnement de la masse poreuse 16 d'évaporateur en fluide frigorigène liquide provenant de la partie condenseur de l'ensemble générateur/condenseur. Ce conduit 30 est agencé par rapport à la masse poreuse 16 d'évaporateur de façon à permettre un écoulement du fluide frigorigène liquide à travers cette masse poreuse 16.

Le fluide frigorigène est amené par capillarité sur toute la surface E de l'organe d'évaporateur 14.

Des moyens d'approvisionnement analogues à ceux du fluide frigorigène liquide permettent un écoulement du mélange enrichi en fluide absorbant à travers cette masse poreuse 20 d'absorbeur.

Ainsi, le mélange enrichi en fluide absorbant est amené par capillarité sur toute la surface A de l'organe d'absorbeur 18.

On notera que la porosité des masses 16, 20 permet de bénéficier de surfaces actives relativement importantes.

On notera de plus que les deux surfaces opposées poreuses E, E', A, A' de chaque organe d'évaporateur 14 et/ou d'absorbeur 18 favorisent la circulation du fluide frogirigène sous forme vapeur. Cette circulation de fluide frigorigène sous forme vapeur est en effet plus efficace lorsque les surfaces E', A' sont poreuses plutôt qu'obturées par d'éventuelles plaques destinées par exemple à former des supports des masses poreuses.

En variante, d'autres moyens d'approvisionnement des masses 16, 20 en liquides, en particulier des moyens permettant de mouiller les surfaces actives de ces masses 16, 20.

Le fluide frigorigène liquide circulant sur la surface E s'évapore de manière à créer une circulation de vapeur de fluide frigorigène entre les surfaces en vis à vis E, A des organes d'évaporateur 14 et d'absorbeur 18.

L'évaporation du fluide frigorigène génère des frigories dans la partie d'évaporateur susceptibles d'être prélevées par le fluide de régulation externe pour refroidir un espace ou un organe du véhicule.

En atteignant la surface A de l'organe d'absorbeur 18, le fluide frigorigène sous forme de vapeur est absorbé par le mélange riche en fluide absorbant.

L'absorption de la vapeur de fluide frigorigène par le mélange riche en fluide absorbant génère des calories dans la partie absorbeur susceptibles d'être prélevées par le fluide de régulation interne pour optimiser le fonctionnement de l'ensemble 12 évaporateur/absorbeur.

On notera que, les surfaces en vis à vis E, A des organes d'évaporateur et d'absorbeur étant relativement grandes et proches l'une de l'autre, les vitesses de transfert entre ces surfaces de la vapeur de fluide frigorigène sont relativement faibles, homogènes voire unidirectionnelles, si bien que les pertes de charges sont négligeables au cours de ce transfert.

Enfin, on notera que l'utilisation de plusieurs organes d'évaporateur et d'absorbeur disposés en série de façon alternée permet de réaliser un ensemble évaporateur/absorbeur relativement peu volumineux.

## Revendications

1. Dispositif d'échange et de transfert thermique du type comprenant un ensemble (12) évaporateur/absorbeur raccordé à un circuit de circulation d'un mélange binaire comportant un premier fluide dit frigorigène et un second fluide dit absorbant, le fluide frigorigène liquide étant évaporé dans une partie évaporateur de l'ensemble (12) puis absorbé dans une partie absorbeur de l'ensemble (12) par le mélange riche en fluide absorbant, **caractérisé en ce que** l'ensemble (12) évaporateur/absorbeur comprend :
- au moins deux surfaces de référence (E, A) en vis à vis, sensiblement planes et parallèles entre elles, délimitant deux masses formant des organes d'évaporateur (14) et d'absorbeur (18) respectivement,
- des moyens (16) d'approvisionnement du fluide frigorigène liquide à la surface de référence (E) de l'organe d'évaporateur (14) et
- des moyens (20) d'approvisionnement du mélange riche en fluide absorbant à la surface de référence (A) de l'organe d'absorbeur (18),
au moins une masse formant un des organes d'évaporateur (14) et d'absorbeur (18) étant en matériau poreux de façon à ce que l'organe d'évaporateur (14) ou d'absorbeur (18) comportant cette masse poreuse soit délimité par deux surfaces poreuses, formant une des surfaces de référence (E, A) et une des surfaces (E', A') opposée à cette surface de référence.

2. Dispositif d'échange et de transfert thermique selon la revendication 1, **caractérisé en ce qu'**il comprend des moyens (30) de renvoi du mélange riche en fluide absorbant vers la surface de référence (A) de l'organe d'absorbeur (18), ces moyens de 30 renvoi (30) étant intercalés entre les surfaces de référence (E, A).

3. Dispositif d'échange et de transfert thermique selon la revendication 2, **caractérisé en ce que** les moyens de renvoi (30) comprennent au moins une paroi de renvoi (32) orientée de façon à favoriser l'écoulement par gravité du mélange riche en fluide absorbant vers la surface de référence (A) de l'organe d'absorbeur (18).

4. Dispositif d'échange et de transfert thermique selon l'une quelconque des revendications précédentes, **caractérisé en ce que** l'ensemble (12) évaporateur/absorbeur comprend plusieurs organes, par exemple au nombre de cinq, formant des organes tantôt d'évaporateur (14) et tantôt d'absorbeur (18) disposés en alternance.

5. Dispositif d'échange et de transfert thermique selon l'une quelconque des revendications précédentes, **caractérisé en ce que** le matériau poreux comprend une mousse ou des fibres cellulaires.

6. Dispositif d'échange et de transfert thermique selon l'une quelconque des revendications précédentes, **caractérisé en ce que** la surface de référence (E) de l'organe d'évaporateur (14) délimite une masse poreuse (16) d'évaporateur formant les moyens d'approvisionnement du fluide frigorigène liquide.

7. Dispositif d'échange et de transfert thermique selon l'une quelconque des revendications précédentes, **caractérisé en ce que** la surface de référence (A) de l'organe d'absorbeur (18) délimite une masse poreuse d'absorbeur formant les moyens (20) d'approvisionnement du mélange riche en fluide absorbant.

8. Dispositif d'échange et de transfert thermique selon l'une quelconque des revendications précédentes, **caractérisé en ce que** l'une au moins des surfaces de référence (E, A) délimite une masse en matériau de conductivité thermique supérieure ou égale à 10 W/mK, notamment en métal ou en céramique.

9. Dispositif d'échange et de transfert thermique selon l'une quelconque des revendications précédentes, **caractérisé en ce que** l'une au moins des surfaces de référence (E, A) présente une caractéristique géométrique, notamment une forme ondulée ou crénelée, maximisant son aire.

10. Dispositif d'échange et de transfert thermique selon l'une quelconque des revendications précédentes, **caractérisé en ce que** l'une au moins des surfaces de référence (E, A), dite surface hydrophile, présente une caractéristique géométrique, notamment un relief ou motif creux ou saillant, favorisant la répartition, sur cette surface hydrophile, du fluide frigorigène liquide ou du mélange riche en fluide absorbant.

11. Dispositif d'échange et de transfert thermique selon l'une quelconque des revendications précédentes, **caractérisé en ce que** l'ensemble (12) évaporateur/absorbeur comprend des moyens (26, 28) de récupération sélective du fluide frigorigène liquide sortant de l'organe d'évaporateur (14) et du mélange riche en fluide absorbant sortant de l'organe d'absorbeur (18).

12. Dispositif d'échange et de transfert thermique selon l'une quelconque des revendications précédentes, **caractérisé en ce que** l'organe d'évaporateur (14) est couplé thermiquement à un circuit de fluide caloporteur, dit fluide de régulation, destiné à prélever des frigories de l'organe d'évaporateur (14).

13. Dispositif d'échange et de transfert thermique selon la revendication 12, **caractérisé en ce que** l'organe d'évaporateur (14) comprend une masse d'évaporateur dans laquelle sont ménagés des canaux (22) de passage du fluide de régulation prélevant des frigories.

14. Dispositif d'échange et de transfert thermique selon l'une quelconque des revendications précédentes, **caractérisé en ce que** l'organe d'absorbeur (18) est couplé thermiquement à un circuit de fluide caloporteur, dit fluide de régulation, destiné à prélever des calories de l'organe d'absorbeur (18).

15. Dispositif d'échange et de transfert thermique selon la revendication 14, **caractérisé en ce que** l'organe d'absorbeur (18) comprend une masse d'absorbeur dans laquelle sont ménagés des canaux (24) de passage du fluide de régulation prélevant des calories.

16. Dispositif d'échange et de transfert thermique selon l'une quelconque des revendications 12 à 15, **caractérisé en ce que** le fluide de régulation est un fluide circulant dans un véhicule automobile.

## Claims

1. Heat exchange and heat transfer device of the type comprising an evaporator/absorber assembly (12) connected to a circuit for circulating a binary mixture comprising a first fluid, termed refrigerant, and a second fluid, termed absorbent, the liquid refrigerant fluid being evaporated in an evaporator portion of the assembly (12) and then absorbed in an absorber portion of the assembly (12) by the absorbent fluid-rich mixture, **characterized in that** the evaporator/absorber assembly (12) comprises:
- at least two mutually opposite reference surfaces (E, A), which are substantially planar and parallel to one another, defining two masses forming evaporator (14) and absorber (18) units respectively,
- means (16) for supplying the liquid refrigerant fluid to the reference surface (E) of the evaporator unit (14), and
- means (20) for supplying the absorbent fluid-rich mixture to the reference surface (A) of the absorber unit (18),
at least one mass forming one of the evaporator (14) and absorber (18) units being made of porous material such that the evaporator (14) or absorber (18) unit comprising this porous mass is defined by two porous surfaces, forming one of the reference surfaces (E, A) and one of the surfaces (E', A') opposed to this reference surface.

2. Heat exchange and heat transfer device according to Claim 1, **characterized in that** it comprises means (30) for returning the absorbent fluid-rich mixture towards the reference surface (A) of the absorber unit (18), these return means (30) being interposed between the reference surfaces (E, A).

3. Heat exchange and heat transfer device according to Claim 2, **characterized in that** the return means (30) comprise at least one return wall (32) oriented so as to promote gravity flow of the absorbent fluid-rich mixture towards the reference surface (A) of the absorber unit (18).

4. Heat exchange and heat transfer device according to any one of the preceding claims, **characterized in that** the evaporator/absorber assembly (12) comprises a plurality, for example five, units forming alternately arranged evaporator (14) and absorber (18) units.

5. Heat exchange and heat transfer device according to any one of the preceding claims, **characterized in that** the porous material comprises a foam or cellular fibres.

6. Heat exchange and heat transfer device according to any one of the preceding claims, **characterized in that** the reference surface (E) of the evaporator unit (14) defines a porous evaporator mass (16) forming the means for supplying the liquid refrigerant fluid.

7. Heat exchange and heat transfer device according to any one of the preceding claims, **characterized in that** the reference surface (A) of the absorber unit (18) defines a porous absorber mass forming the means (20) for supplying the absorbent fluid-rich mixture.

8. Heat exchange and heat transfer device according to any one of the preceding claims, **characterized in that** at least one of the reference surfaces (E, A) defines a mass made of a material with a thermal conductivity greater than or equal to 10 W/mK, particularly one made of metal or ceramic.

9. Heat exchange and heat transfer device according to any one of the preceding claims, **characterized in that** at least one of the reference surfaces (E, A) has a geometric feature, in particular a corrugated or crenellated shape, maximizing its area.

10. Heat exchange and heat transfer device according to any one of the preceding claims, **characterized in that** at least one of the reference surfaces (E, A), termed hydrophilic surface, has a geometric feature in particular a hollow or projecting relief or pattern, promoting the distribution over this hydrophilic surface of the liquid refrigerant fluid or the absorbent fluid-rich mixture.

11. Heat exchange and heat transfer device according to any one of the preceding claims, **characterized in that** the evaporator/absorber assembly (12) comprises means (26, 28) for selectively recovering the liquid refrigerant fluid leaving the evaporator unit (14) and the absorbent fluid-rich mixture leaving the absorber unit (18).

12. Heat exchange and heat transfer device according to any one of the preceding claims, **characterized in that** the evaporator unit (14) is thermally coupled to a circuit for heat-transfer fluid, termed regulating fluid, intended to extract cold energy from the evaporator unit (14).

13. Heat exchange and heat transfer device according to Claim 12, **characterized in that** the evaporator unit (14) comprises an evaporator mass in which there are formed channels (22) for the passage of the regulating fluid extracting the cold energy.

14. Heat exchange and heat transfer device according to any one of the preceding claims, **characterized in that** the absorber unit (18) is thermally connected to a circuit for heat-transfer fluid, termed regulating fluid, intended to extract heat energy from the absorber unit (18).

15. Heat exchange and heat transfer device according to Claim 14, **characterized in that** the absorber unit (18) comprises an absorber mass in which there are formed channels (24) for the passage of the regulating fluid extracting the heat energy.

16. Heat exchange and heat transfer device according to any one of Claims 12 to 15, **characterized in that** the regulating fluid is a fluid circulating in a motor vehicle.

## Patentansprüche

1. Wärmeaustausch- und -übertragungsvorrichtung des Typs, die eine Verdampfer-/Absorbereinheit (12) aufweist, die an einen Zirkulationskreislauf eines binären Gemischs angeschlossen ist, das ein erstes Fluid, Kältemittel genannt, und ein zweites Fluid, Absorptionsmittel genannt, aufweist, wobei das flüssige Kältemittelfluid in einem Verdampferteil der Einheit (12) verdampft und dann in einem Absorptionsteil der Einheit (12) von dem an Absorptionsfluid reichen Gemisch absorbiert wird, **dadurch gekennzeichnet, dass** die Verdampfer-/Absorptionseinheit (12) Folgendes aufweist:
- mindestens zwei Referenzflächen (E, A) in Gegenüberlage, die im Wesentlichen eben und zueinander parallel sind, die zwei Massen abgrenzen, die jeweils ein Verdampferorgan (14) und ein Absorptionsorgan (18) bilden,
- Zuführmittel (16) des flüssigen Kältemittelsfluids zu der Referenzfläche (E) des Verdampferorgans (14),
- Mittel (20) zum Zuführen des an absorbierendem Fluid reichen Gemischs zu der Referenzfläche (A) des Absorptionsorgans (18),
mindestens eine Masse, die entweder das Verdampferorgan (14) oder das Absorptionsorgan (18) bildet und aus einem porigen Werkstoff derart besteht, dass das Verdampferorgan (14) oder das Absorptionsorgan (18), das diese porige Masse enthält, von zwei porigen Flächen abgegrenzt wird, die eine der Referenzflächen (E, A) und eine der Flächen (E', A') bilden, die dieser Referenzfläche gegenüber liegen.

2. Wärmeaustausch- und -übertragungsvorrichtung nach Anspruch 1, **dadurch gekennzeichnet, dass** sie Mittel (30) zum Umlenken des an absorbierendem Fluid reichen Gemischs zu der Referenzfläche (A) des Absorptionsorgans (18) aufweist, wobei diese Umlenkmittel (30) zwischen die Referenzflächen (E, A) eingefügt sind.

3. Wärmeaustausch- und -übertragungsvorrichtung nach Anspruch 2, **dadurch gekennzeichnet, dass** die Umlenkmittel (30) mindestens eine Umlenkwand (32) aufweisen, die derart ausgerichtet ist, dass das schwerkraftbedingte Abfließen des an absorbierendem Fluid reichen Gemischs zu der Referenzfläche (A) des Absorptionsorgans (18) begünstigt wird.

4. Wärmeaustausch- und -übertragungsvorrichtung nach einem der vorhergehenden Ansprüche, **dadurch gekennzeichnet, dass** die Verdampfer-/Absorptionseinheit (12) mehrere Organe aufweist, zum Beispiel fünf, die einmal Verdampferorgane (14) und einmal Absorptionsorgane (18), die abwechselnd angeordnet sind, bilden.

5. Wärmeaustausch- und -übertragungsvorrichtung nach einem der vorhergehenden Ansprüche, **dadurch gekennzeichnet, dass** der porige Werkstoff einen Schaumstoff oder Zellfasern aufweist.

6. Wärmeaustausch- und -übertragungsvorrichtung nach einem der vorhergehenden Ansprüche, **dadurch gekennzeichnet, dass** die Referenzfläche (E) des Verdampferorgans (14) eine porige Verdampfermasse (16) abgrenzt, die die Zuführmittel des flüssigen Kältemittelfluids bildet.

7. Wärmeaustausch- und -übertragungsvorrichtung nach einem der vorhergehenden Ansprüche, **dadurch gekennzeichnet, dass** die Referenzfläche (A) des Absorptionsorgans (18) eine porige Absorptionsmasse abgrenzt, die die Zuführmittel (20) des an absorbierendem Fluid reichen Gemischs bildet.

8. Wärmeaustausch- und -übertragungsvorrichtung nach einem der vorhergehenden Ansprüche, **dadurch gekennzeichnet, dass** mindestens eine der Referenzflächen (E, A) eine Masse aus Werkstoff mit einer Wärmeleitfähigkeit abgrenzt, die größer oder gleich 10 W/mK ist, insbesondere aus Metall oder aus Keramik.

9. Wärmeaustausch- und -übertragungsvorrichtung nach einem der vorhergehenden Ansprüche, **dadurch gekennzeichnet, dass** mindestens eine der Referenzflächen (E, A) ein geometrisches Merkmal aufweist, insbesondere eine wellige oder gerippte Form, die ihre Fläche maximiert.

10. Wärmeaustausch- und -übertragungsvorrichtung nach einem der vorhergehenden Ansprüche, **dadurch gekennzeichnet, dass** mindestens eine der Referenzflächen (E, A), hydrophile Fläche genannt, ein geometrisches Merkmal aufweist, insbesondere ein Relief oder ein vertieftes oder vorstehendes Muster, das die Verteilung des flüssigen Kältemittelfluids oder des an absorbierendem Fluid reichen Gemischs auf dieser hydrophilen Fläche begünstigt.

11. Wärmeaustausch- und -übertragungsvorrichtung nach einem der vorhergehenden Ansprüche, **dadurch gekennzeichnet, dass** die Verdampfer-/Absorptionseinheit (12) Mittel (26, 28) zum selektiven Zurückgewinnen des flüssigen Kältemittelfluids, das aus dem Verdampferorgan (14) austritt, und des an absorbierendem Fluid reichen Gemischs, das aus dem Absorptionsorgan (18) austritt, aufweist.

12. Wärmeaustausch- und -übertragungsvorrichtung nach einem der vorhergehenden Ansprüche, **dadurch gekennzeichnet, dass** das Verdampferorgan (14) thermisch mit einem Kreislauf mit Kühlflüssigkeit, Regulierfluid genannt, gekoppelt ist, das dazu bestimmt ist, die Frigorien des Verdampferorgans (14) zu entnehmen.

13. Wärmeaustausch- und -übertragungsvorrichtung nach Anspruch 12, **dadurch gekennzeichnet, dass** das Verdampferorgan (14) eine Verdampfermasse aufweist, in der Kanäle (22) zum Durchgehen des Regulierfluids, das Frigorien entnimmt, eingerichtet sind.

14. Wärmeaustausch- und -übertragungsvorrichtung nach einem der vorhergehenden Ansprüche, **dadurch gekennzeichnet, dass** das Absorptionsorgan (18) thermisch mit einem Kreislauf mit Kühlmittel, Regulierfluid genannt, gekoppelt ist, das dazu bestimmt ist, dem Absorptionsorgan (18) Kalorien zu entnehmen.

15. Wärmeaustausch- und -übertragungsvorrichtung nach Anspruch 14, **dadurch gekennzeichnet, dass** das Absorptionsorgan (18) eine Absorptionsmasse aufweist, in der Kanäle (24) zum Durchgehen des Regulierfluids, das Kalorien entnimmt, eingerichtet sind.

16. Wärmeaustausch- und -übertragungsvorrichtung nach einem der vorhergehenden Ansprüche 12 bis 15, **dadurch gekennzeichnet, dass** das Regulierfluid ein Fluid ist, das in einem Kraftfahrzeug zirkuliert.
